# EUROPEAN PATENT SPECIFICATION

(11) **EP 1 258 424 B1**
(45) Date of publication and mention of the grant of the patent: **25.06.2008**
(21) Application number: 02010966.6
(22) Date of filing: 16.05.2002
(51) Int. Cl.: B62M 27/02, F01M 11/08

(54) **Vehicle, especially snowmobile, with an engine and and oil tank**
Schneemobilfahrzeug mit Motor und mit Ölbehälter
Véhicules à neige avec moteur et réservoir d'huile

(30) Priority: 16.05.2001 JP 2001146799
(43) Date of publication of application: 20.11.2002
(73) Proprietor: Yamaha Hatsudoki Kabushiki Kaisha, Iwata-shi, Shizuoka-ken (JP)
(72) Inventor: Moriyama, Takashi, c/o Yamaha Hatsudoki K. K., Iwata-shi, Shizuoka-ken (JP)
(74) Representative: Grünecker, Kinkeldey, Stockmair & Schwanhäusser Anwaltssozietät

(56) References cited:
- US-A- 5 152 365
- US-A- 5 174 258
- US-A- 5 568 842
- US-A- 6 070 683
- US-B1- 6 170 589
- US-B1- 6 247 442

## Description

This invention relates to a vehicle, especially snowmobile, with an engine and an oil tank.

The engine for snowmobiles is placed in the engine compartment surrounded with a vehicle body cover attached over the front part of the vehicle body. In the case the engine is provided with a lubrication system, the oil tank is conventionally placed in front of the engine and to be elongate in the fore-and-aft direction as disclosed for example in an officially published Japanese Patent with a No. 2863580, or in closest prior art document US 6170589.

With the conventional oil tank layout, however, the oil tank is placed in front of the engine and extends long forward. Therefore, the vehicle cannot be made compact in its longitudinal dimension. Moreover, since the oil surface is relatively wide, the oil surface is greatly waved and bubbled by the vibration as the vehicle runs, and bubbles are mixed in the lubricant oil to cause poor lubrication.

It is an objective of the present invention as disclosed by the features of independent claim 1, to provide a vehicle, especially snowmobile, with an engine and an oil tank having a compact structure.

According to the present invention, said objective is solved by a vehicle, especially snowmobile, with an engine and an oil tank, wherein said oil tank is formed vertically elongated and placed by a side of said engine.

Preferably, said engine and said oil tank are disposed in an engine compartment and said engine compartment is surrounded with a covering member and disposed in a front part of a vehicle body of the vehicle.

Preferably, said covering member is provided with at least one fresh air port for introducing fresh air into said engine compartment, and said fresh air port is located in front of said oil tank so that fresh air introduced through said fresh air port flows from an area in front of said oil tank to said oil tank, and/or a brake means is provided behind said oil tank, and an air outlet is placed behind said brake means for discharging fresh air introduced into said engine compartment out of said vehicle body.

Preferably, said oil tank is provided with a breather pipe connection port provided on an upper part of the oil tank and located outwardly with regard to a vehicle width direction.

Preferably, a breather pipe is connected to the breather pipe connection port of said oil tank and to a cam driving chamber and/or a crank chamber of said engine for providing a communication of said cam driving chamber and/or crank chamber with said oil tank.

Preferably, the oil tank comprises a slope section arranged in a middle part of the oil tank regarding the vertical direction, and an oil return port is provided on an upper part of said oil tank, wherein said oil return port located so that said lubricant oil returned to said oil tank through said oil return port falls on said slope section, and/or a supply port for supplying lubricant oil to said engine is provided in a bottom part of said oil tank.

Preferably, a guide means is provided to cause the lubricant oil returned through said oil return port into the oil tank to fall onto said slope section.

Preferably, a bracket is secured to an outside wall of said oil tank, said oil tank is secured to the vehicle body frame through said bracket, said guide means is located on an inside wall of said oil tank, and means for securing said guide means to said oil tank is also used to secure said bracket to said oil tank.

Preferably, said slope section is defined by a recessed portion formed on one half side of the oil tank, especially said recessed portion is recessed on a lower part of said oil tank from an inside toward an outside of said oil tank in the direction of the vehicle width.

Preferably, a draining area for draining lubricant oil is provided in a bottom part of a further half side of said oil tank besides said recessed portion.

It is an advantage of the present invention to provide an oil tank layout that snowmobiles are made with a longitudinally compact vehicle body while preventing lubricant oil from bubbling.

Preferred embodiments of the present invention are laid down in further dependent claims.

In the following, the present invention is explained in greater detail with respect to several embodiments thereof in conjunction with the accompanying drawings, wherein:
- FIG. 1: is a side view of a snowmobile according to an embodiment;
- FIG. 2: is a perspective view of the engine portion of the snowmobile shown in FIG. 1;
- FIG. 3: is a plan view of the snowmobile shown in FIG. 1;
- FIG. 4: is a front view of the snowmobile shown in FIG. 1;
- FIG. 5: is a front view of an oil tank according to an embodiment;
- FIG. 6: is a back view of the oil tank shown in FIG. 5;
- FIG. 7: is a side view of the 011 tank shown in FIG. 5;
- FIG. 8: is a top view of the oil tank shown in FIG. 5;
- FIG. 9: is a bottom view of the oil tank shown in FIG. 5;
- FIG. 10: is a back view for explaining the internal structure of the oil tank according to the embodiment;
- FIG. 11: is a side view for explaining the internal structure of the oil tank shown in FIG. 10;
- FIG. 12: is a drawing for explaining the constitution of the guide plate shown in FIG. 10; and
- FIG. 13: is a drawing for explaining the constitution of the baffle plate shown in FIG. 10.

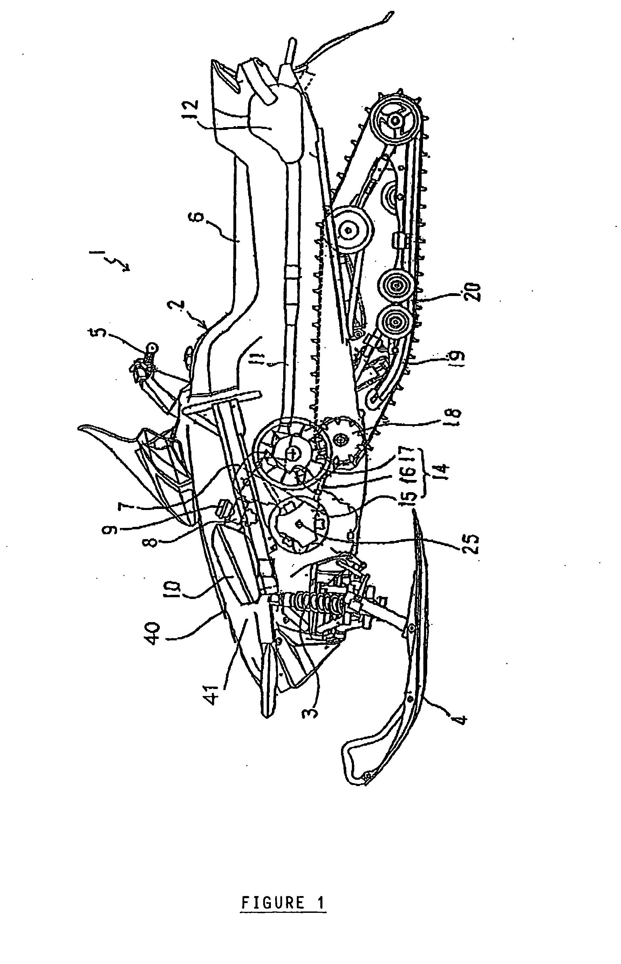

- FIG. 1: is a general side view of a snowmobile according to an embodiment.

The snowmobile 1 has right and left suspensions 3 in the front part of a vehicle body 2. Each front suspension 3 is connected to a ski 4 for directional control. The ski 4 is connected to handlebars 5 located in the center of the vehicle body through steering system components (not shown) such as a steering shaft, arm pivots, and linking rods. A seat 6 for a rider to sit on is provided on a part of the vehicle body 2 behind the handlebars 5.

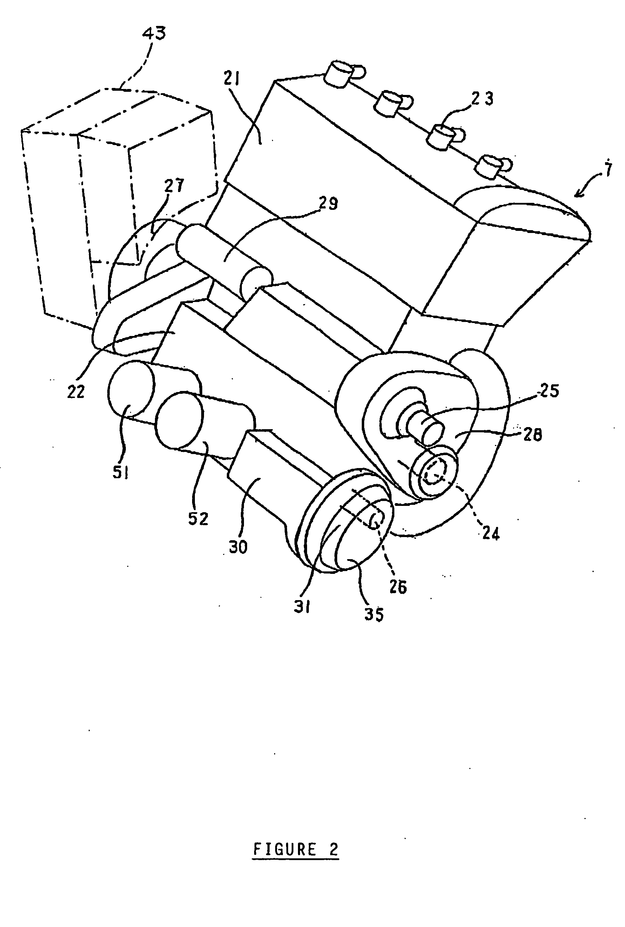

An engine compartment 41 enclosed with a vehicle body cover 40 is formed in the front part of the vehicle body 2. An engine 7 is placed in the engine compartment 41. In this embodiment, the engine 7 is of an in-line, four-cylinder, four-stroke cycle, water-cooled engine. The lubricating system of this engine 7 is of the dry sump type provided with an oil tank as will be described later. The engine 7 is disposed with its crankshaft 24 (in FIG. 2) placed in the vehicle's width direction (normal to the drawing surface) with cylinders tilted rearward. A carburetor 9 is provided on an intake pipe 8 of the engine 7. An intake silencer 10 is attached to an end of the intake pipe 8. An exhaust pipe 11 is placed behind the engine 7, with a muffler 12 connected to the rear end of the exhaust pipe 11 in the rear part of the vehicle body.

A power takeout shaft 25 parallel to the crankshaft 24 is connected to the crankshaft of the engine 7. A V-belt type automatic transmission 14 is attached to the power takeout shaft 25. The automatic transmission 14 is constructed with a drive pulley 15 and a driven pulley 17 connected through a V-belt 16 to the drive pulley 15. The driven pulley 17 is connected to a drive wheel 18 through a chain (not shown). In this way, the rotary power of the crankshaft of the engine 7 is transmitted through the automatic transmission 14 to the drive wheel 18 which in turn drives an endless track belt 20 routed along a slide rail 19 to propel the vehicle body 2 for running.

FIG. 2 is a general external view of the engine 7.

The rearward-tilted four-cylinder engine 7 is formed with a cylinder head 21 and a crankcase 22 placed under the cylinder head 21. The crankcase 22 is separated into upper and lower components. An ignition plug (power source cable) 23 for each cylinder is attached to the top portion of the cylinder head 21.

The power takeout shaft 25 parallel to the transversely disposed crankshaft 24 is connected to the crankshaft 24. An auxiliary device shaft 26 parallel to the crankshaft 24 is provided below the power takeout shaft 25. The crankshaft 24 is in a position behind the power takeout shaft 25 and the auxiliary device shaft 26 (regarding horizontal direction) and between the latter two (regarding vertical direction).

A flywheel housing section 27 is provided on one end, with respect to the crankshaft 24's direction, of the engine 7. A power generating rotor (flywheel magneto, not shown) is secured to an end of the crankshaft 24 in the housing section 27. A cover 28 is provided on the other side, opposite to the power generating rotor, of the engine to cover the power takeout shaft 25 and the crankshaft 24, The power takeout shaft 25 further extends out of the cover 28 and is connected to the automatic transmission 14 (FIG. 1). A starter motor 29 is provided, by the side of the power takeout shaft 25, and displaced toward the opposite side of the takeout portion of the power takeout shaft 25.

An oil pump housing section 30 for accommodating a scavenging pump and a feed pump, both not shown, constituting an oil pump unit (not shown), and a cooling water pump housing section 31 for accommodating a cooling water pump (not shown) are provided under the engine 7. Those pumps are mounted with displacements on one side on the auxiliary device shaft 26. An oil cooler 51 and an oil filter 52 are provided on the side, opposite the side toward which the oil pump and the cooling water pump are displaced, by the side of the oil pump. The end of the auxiliary device shaft 26 is enclosed with an auxiliary device shaft cover 35 (a cover for the cooling water pump unit).

An elongate oil tank 43 is placed nearly vertically by the side of the rearward-tilted engine 7. Lubricant oil after flowing through various parts of the engine 7 retums to an oil sump (not shown) in the bottom part of the engine 7. The lubricant oil in the oil sump is drawn with a scavenging pump within the oil pump housing section 30 (not shown) and led to the oil tank 43 through an oil return port 48 provided in the upper part of the oil tank 43. The lubricant oil in the oil tank 43 is supplied to various lubrication points of the engine 7 through an oil supply port 58 provided at the bottom of the oil tank 43, the oil cooler 51, and the oil filter 52.

Since the oil tank is formed vertically elongate as described above, the top level surface area of the lubricant oil is small and so the lubricant oil is restricted from bubbling due to motion or banking of the oil level surface while the vehicle runs on a banked or curved road or due to vibration while the vehicle runs straight forward. Therefore, less bubbles are mixed in the lubricant oil in the oil tank, and smooth and stabilized supply of lubricant oil to various parts of the engine are provided.

Since the oil tank is located right by the side of the engine, It is possible to make the vehicle body size small by making the engine length short in the fore-and-aft direction and also to arrange oil pipes (not shown) interconnecting the engine and the oil tank to be short and generally horizontal. As a result, the lubricant oil can flow between the engine and the oil tank with less flow resistance, the lubricant oil can circulate smoothly

in a stabilized manner, and the pump is required of less suction capacity, resulting in smaller size and lighter weight of the oil pump.

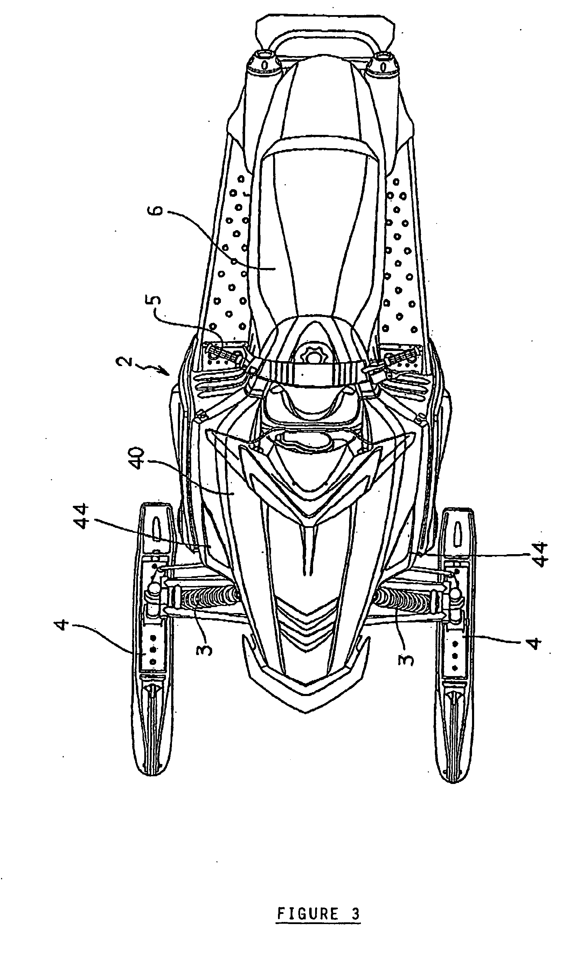

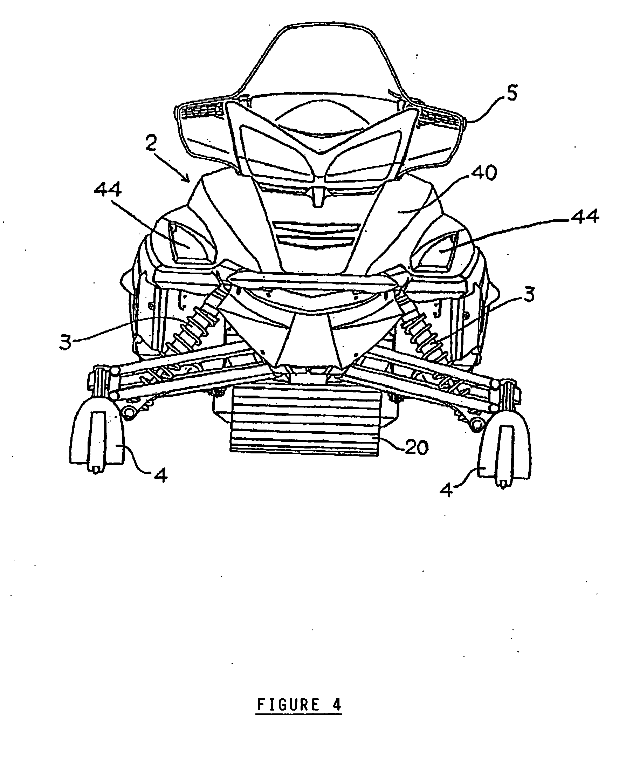

FIGs. 3 and 4 are a plan view and front view, respectively, of the snowmobile.

As shown, the vehicle body cover 40 surrounding the front part of the vehicle body 2 is provided with fresh air ports 44 on its right and left sides. Fresh air drawn through the fresh air ports 44 flows into the engine compartment 41 (FIG. 1). The fresh air from the fresh air port 44 on the right hand side of the vehicle body cools the oil tank 43 (FIG. 2) located by the side of the engine and further flows rearward to cool a brake system (not shown) located behind the oil tank 43.

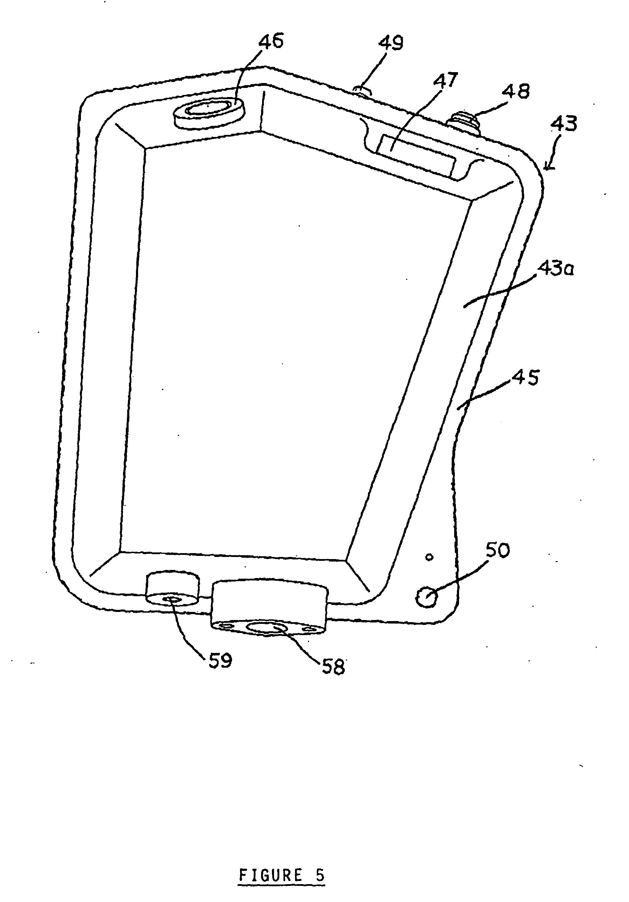

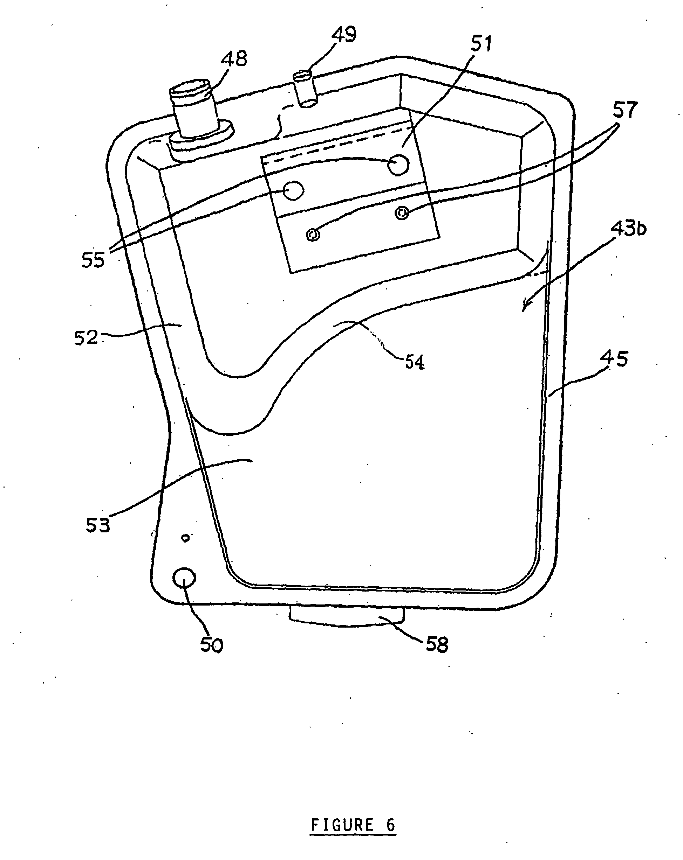

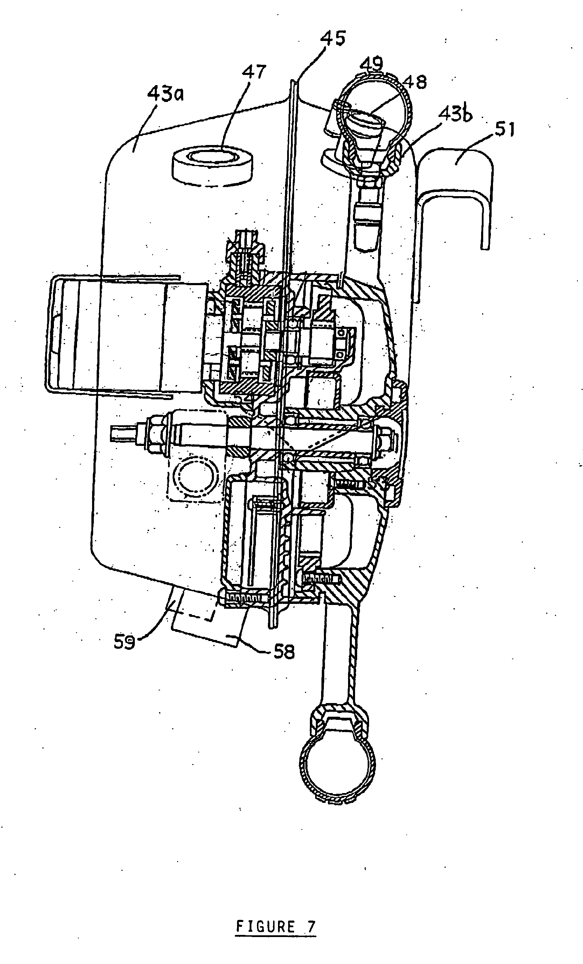

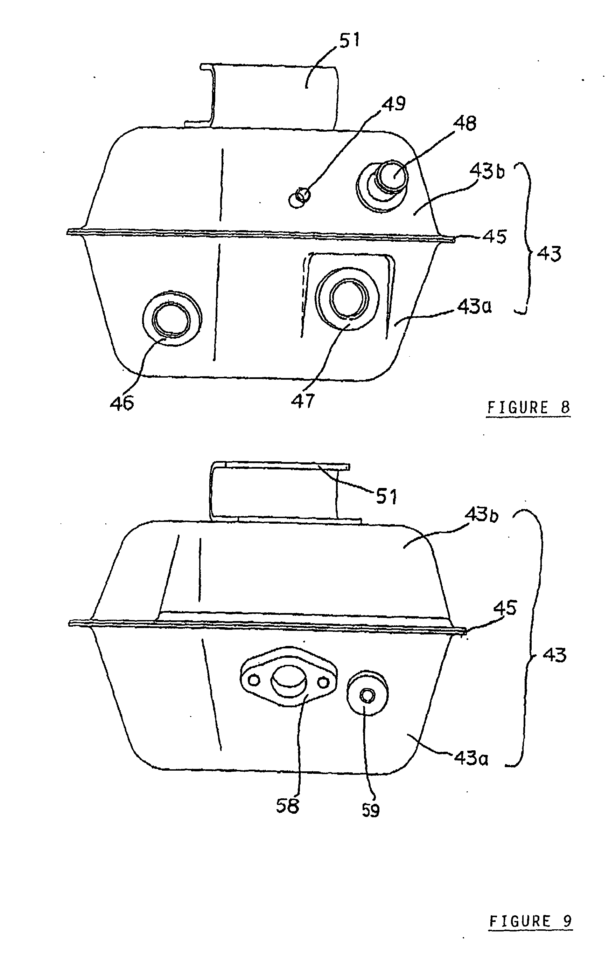

FIGs. 5 to 9 show the shape of the oil tank 43, in which FIG. 5 is a front view (as seen from outside the vehicle body), FIG. 6 is a back view (as seen from inside the vehicle body), FIG. 7 is a side view (as seen from the front of the vehicle body), FIG. 8 is a top view, and FIG. 9 is a bottom view.

The oil tank 43 is a 2-separated structure with a right case 43a and a left case 43b, made of press-formed sheet metal and welded together along the flanges 45. An attachment hole 50 is provided in the lower part of the flange 45 for attaching the oil tank 43 to the vehicle body frame (not shown). The top surface of the oil tank 43 is provided with: a boss 46 for a level gauge, a boss 47 for a liquid level sensor, an oil return port 48, and a breather pipe connection port 49. The lubricant oil in the oil sump in the bottom part of the engine is drawn with an oil pump (a scavenging pump) and led through an oil pipe (not shown) and through the oil return port 48 to the oil tank 43.

Because the oil return port 48 is located on the top part of the oil tank 43, the oil return port 48 is open to the air chamber portion in the oil tank. Therefore, the lubricant oil may be returned through the air chamber to the interior of the oil tank. As a result, the lubricant oil may be returned to the oil tank with less flow resistance, so that the lubricant oil is circulated smoothly.

The breather pipe connection port 49 is connected through a breather pipe (not shown) to the cam driving chamber and/or the crank chamber of the engine. In this way, the oil tank 43 communicates with the cam driving chamber and/or the crank chamber. Blow-by gas or unburned gas and bubbles in the oil tank are introduced through the breather pipe connection port 49 and the breather pipe to at least either one of the cam drive chamber or the crank chamber of the engine. The breather pipe may be connected to the intake side of the engine.

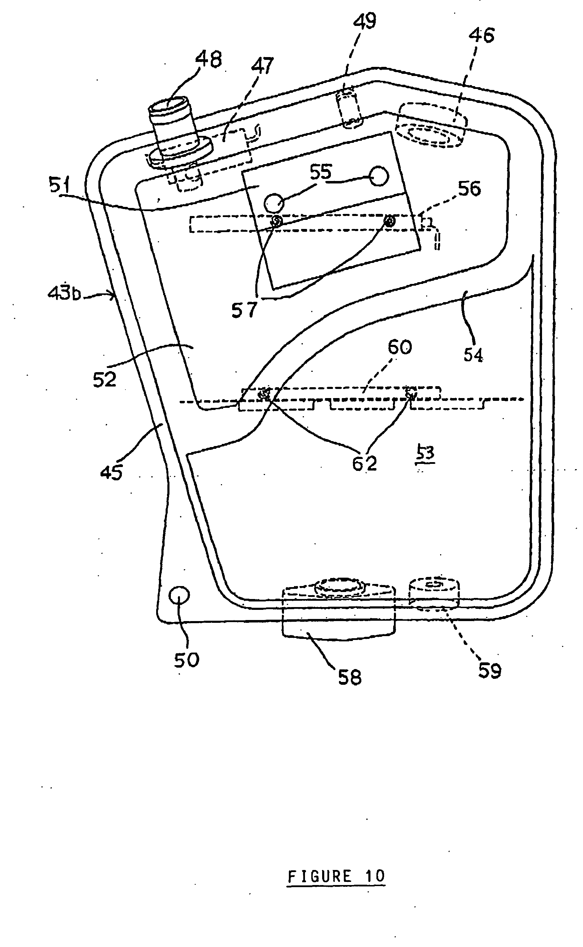

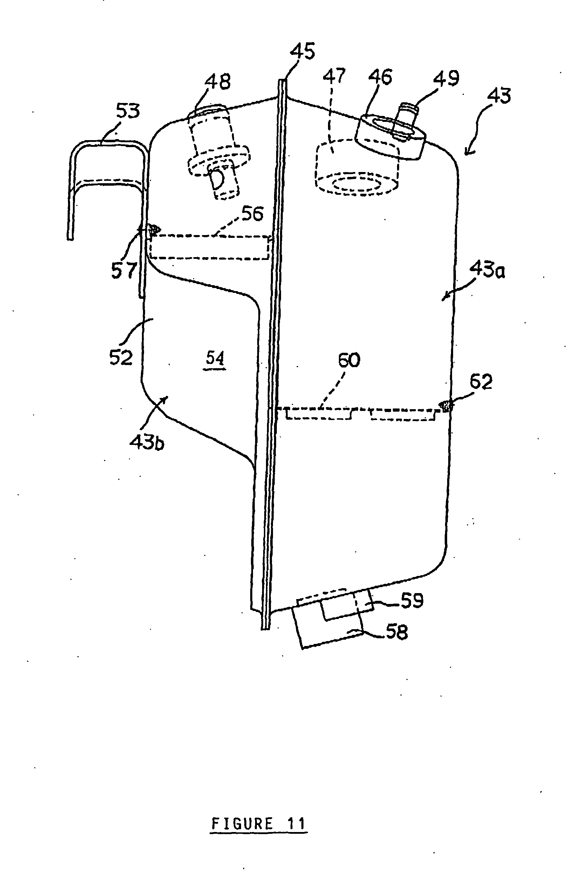

While the breather pipe connection port 49 is provided on the left case 43b of the oil tank 43 in the above embodiment, it may be provided, as shown in FIGs. 10 and 11 which will be described later, in a position on the outer side as possible, with respect to the vehicle width, of the right case 43a. Providing the breather pipe connection port 49 near the outer side, with respect to the vehicle width, prevents lubricant oil in the oil tank 43 from flowing back into the engine when servicing with the vehicle body lying on its side with the oil tank 43 above the engine.

The left case 43b of the oil tank 43 consists of a bulged portion 52 in its upper part and a receded portion 53 below the bulged portion 52. The underside surface of the bulged portion 52 is curved. The curved shape, as shown in FIG. 2, is complementary to the shape of the flywheel housing section 27 for the flywheel of the generator of the engine. This makes it possible to place the oil tank 43 as near the engine as possible to make a compact constitution.

The interior of lower part of the bulged portion 52 forms a slope 54 (FIGs. 6,10 and 11). The oil return port 48 is located in part of the bulged portion 52 above the slope 54. Therefore, the lubricant oil entering the oil return port 48 falls onto a guide plate (described later) and flows the slope 54 and along the slope 54 to the bottom of the right case 43a.

A bracket 51 is attached to the outside surface of the bulged portion 52. The bracket 51 is provided with two attachment holes 55, so that the oil tank 43 is attached to the vehicle body frame (not shown) using three attachment holes including one attachment hole 50 provided in the flange 45. Here, the bracket 51 and the flange 45 may be attached to the vehicle body frame either directly or through an attachment fitting to the vehicle body frame.

Preferably, the part of the vehicle body frame where the oil tank is attached is located between the engine and the oil tank, and in a fiat and vertically elongate shape. This makes it possible to place the oil tank as near to the engine as possible so that the oil tank is reliably secured to the vehicle body frame through the three, upper and lower attachment points.

The bracket 51, as will be described later, is secured to the wall surface of the 011 tank 43 using two rivets 57 together with a guide plate 56 located inside the bulged portion 52 (FIGs. 10, 11 and 12).

The bottom portion of the right case 43a of the oil tank 43 is provided with an oil supply port 58 for feeding out lubricant oil toward the engine and a dram hole 59 for discharging and changing lubricant oil.

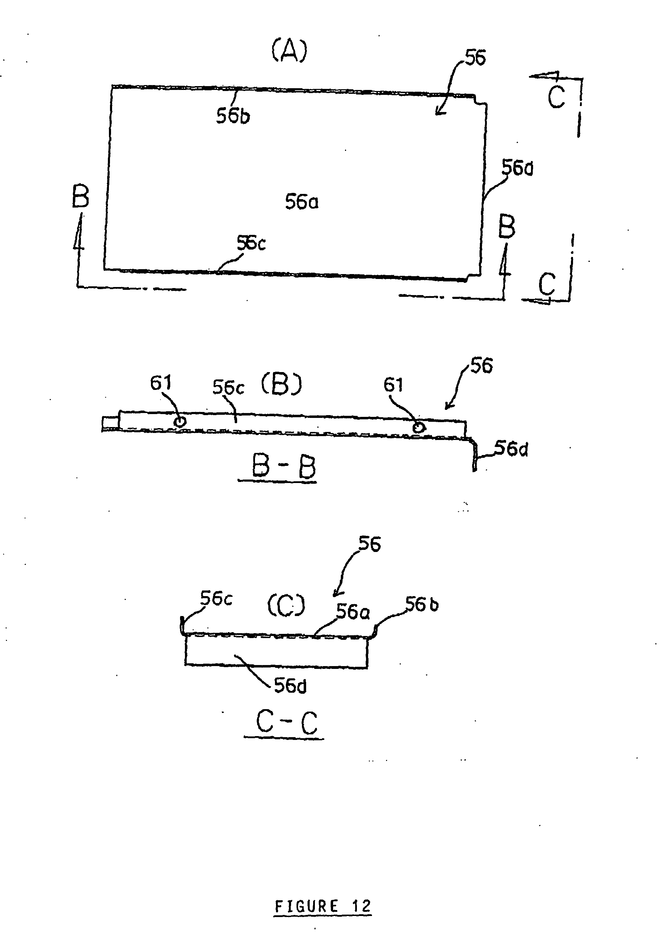

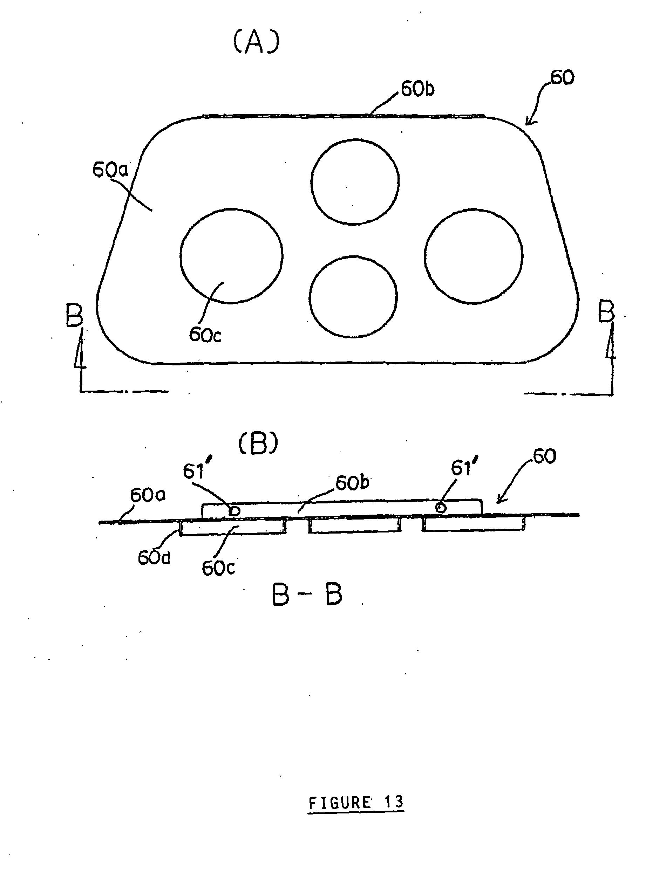

FIGS. 10 and 11 are a back view and a side view respectively showing the internal structure of the oil tank. FIGs. 12 and 13 show individual components inside the oil tank.

As shown in the drawings, the guide plate 56 is provided inside the bulged portion 52 of the left case 43b of the oil tank 43. As shown in FIG. 12, the guide plate 56 consists of a fiat portion 56a, a guide edge 56b on one side of the fiat portion, an attachment edge 56c on the other side, and a tail end portion 56d. The attachment edge 56c is provided with attachment holes 61. The attachment holes 61 are to be aligned with the rivets 57 for securing the bracket 51, so that the guide plate 56 is secured to the inside wall of the oil tank using the same rivets 57. Lubricant oil flowing in from the oil return port 48 falls on the guide plate 56, flows over its fiat portion 56a, falls from the tail end portion 56d onto the slope 54 (FIGs. 6,10 and 11) of the inner bottom surface of the bulged portion 52 and flows along the slope 54 to the bottom of the right case 43a.

A baffle plate 60 is secured inside the right case 43a in a position corresponding to the lowermost part of the bulged portion 52. The baffle plate 60 consists of a flat portion 60a and an attachment portion 60b formed on one side of the flat portion, and secured to the inside wall of the right case 43a using two holes 61' formed in the attachment portion 60b and two, for example, rivets 62 (FIGs. 10, 11 and 13). The flat portion 60a is formed with plural (four in this example) through passage holes 60c, with their circumferential edges formed to be downward erected edges 60d.

Providing the baffle plate 60 in about the same position as the (end of the) slope 54 on which lubricant oil falls makes it possible to effectively restrict oil surface from waving and bubbling by the synergic effect of the baffle plate 60 and the slope 54. Here, the through passage holes 60c of the baffle plate 60 permits smooth motion of the lubricant oil within the oil tank. Owing to the downward erected edges 60d of the through passage holes 60c formed in the fiat portion 60a, lubricant oil falling from above may flow down smoothly and oil splashes from the wavy oil surface below the baffle plate 60 are restricted, so that lubricant oil is effectively restricted from bubbling.

According to the embodiment as described above, since the oil tank is located right by the side of the engine, it is possible to make the vehicle body size small in the fore-and aft-direction. Since the oil tank is formed vertically elongate, the top level surface area of the lubricant oil is small and so the lubricant oil is restricted from bubbling due to waving or banking of the oil level surface while the vehicle runs on a banked or curved road or due to vibration while the vehicle runs straight forward. Therefore, less bubbles are mixed in the lubricant oil in the oil tank, and smooth and stabilized supply of lubricant oil to various parts of the engine are provided.

The embodiment describes a vehicle, especially snowmobile 1, with an engine 7 and an oil tank 43. Said oil tank 43 is formed vertically elongated and placed by a side of said engine. Said engine 7 and said oil tank 43 are disposed in an engine compartment 41 and said engine compartment 41 is surrounded with a covering member 40 and disposed in a front part of a vehicle body 2 of the vehicle.

Said embodiment teaches an oil tank layout for a snowmobile with an engine compartment 41 surrounded with a covering member 40 disposed in the front part of the vehicle body 2 of said snowmobile, with an engine 7 and an oil tank 43 disposed in said engine compartment 41, and with lubricant oil for lubricating various parts of said engine 7 contained in said oil tank 43, wherein said oil tank 43 is formed vertically elongate and placed by the side of said engine 7.

With the above constitution, since the oil tank is placed by the side of the engine, the vehicle can be made compact in its longitudinal dimension. Moreover, since the oil tank is made elongate in the vertical direction, the surface area of lubricant oil is made small. Therefore, motion or inclination of lubricant oil surface when the vehicle runs on a sloped or curved road is restricted, or lubrication oil is restricted from bubbling due to vibration when the vehicle runs. Therefore, lubricant oil with less bubbles mixed can be supplied from the oil tank to various lubrication points of the engine, smoothly in a stabilized manner.

In the vehicle according to the embodiment, said covering member 40 is provided with at least one fresh air port 44 for introducing fresh air into said engine compartment 41. Said fresh air port 44 is located in front of said oil tank 43 so that fresh air introduced through said fresh air port 44 flows from an area in front of said oil tank 43 to said oil tank 43. According to the embodiment, a brake means is provided behind said oil tank 43. An air outlet is placed behind said brake means for discharging fresh air introduced into said engine compartment 41 out of said vehicle body 2.

Thus, in the example of constitution, the covering member 40 is provided with fresh air ports 44 for introducing fresh air into the engine compartment 41, the fresh air ports 44 are located in front of the oil tank 43 so that fresh air introduced through the fresh air ports flows from the area in front of the oil tank to the oil tank 43, a brake system is provided behind the oil tank 43, and an air outlet for discharging fresh air introduced into the engine compartment 41 out of the vehicle body is placed behind the brake system.

With the above constitution, the oil tank of a relatively low temperature is cooled first with the fresh air introduced through the fresh air port, and the fresh air then cools the brake system of a relatively high temperature, Therefore, the lubricant oil in the oil tank and the brake system are cooled efficiently.

In the vehicle according to the embodiment the oil tank 43 is provided with a breather pipe connection port 49 provided on an upper part of the oil tank 43 and located outwardly with regard to a vehicle width direction. A breather pipe is connected to the breather pipe connection port 49 of said oil tank 43 and to a cam driving chamber and/or a crank chamber of said engine 7 for providing a communication of said cam driving chamber and/or crank chamber with said oil tank 43.

Thus, in the example of constitution, one end of a breather pipe is connected to the upper part, displaced outward in the vehicle width direction, of said oil tank 43, the other end of said breather pipe is connected to the cam driving chamber and/or the crank chamber of said engine 7, and said cam driving chamber and/or crank chamber are/is made to communicate with said oil tank.

With the above constitution, even if the vehicle is placed to lie on its side with the oil tank on the upper side for servicing the vehicle, lubricant oil in the oil tank is less likely to flow back through the breather pipe because the one end of the breather pipe in that state is located higher than the oil tank. incidentally, in the case the vehicle lies on its side with the oil tank on the lower side, there is no possibility of lubricant oil flowing back out, as a matter of course.

In the vehicle according to the embodiment the oil tank 43 comprises a slope section 54 arranged in a middle part of the oil tank 43 regarding the vertical direction. An oil return port 48 is provided on an upper part of said oil tank 43. Said oil return port 48 is located so that said lubricant oil returned to said oil tank through said oil return port 48 falls on said slope section 54. According to the embodiment, a supply port 58 for supplying lubricant oil to said engine 7 is provided in a bottom part of said oil tank 43.

In the example of constitution, about half in the vertical direction of the oil tank 43 is recessed in the horizontal direction to form a slope 54, lubricant oil after lubricating various parts of the engine 7 is returned into the oil tank 43 through an oil return port 48 provided in the upper part of the oil tank 43. The oil return port 48 and the slope 54 are located so that the lubricant oil returned to the oil tank 43 through the oil return port 48 falls on the slope 54, and a supply port for supplying lubricant oil contained in the oil tank 43 to various lubrication points of the engine is provided in the bottom part of the oil tank 43.

With above constitution, lubricant oil falls first on the slope formed in the middle of the tank height and then onto the oil level surface in the oil tank. Therefore, the falling speed of lubricant oil is lowered with the slope. And the lubricant oil flows along the slope and over the lower inside wall of the oil tank and collects in the lower part of the oil tank. In this way, waves on the lubricant oil surface and oil splashes due to falling lubricant oil and resultant bubbling are restricted from occurring. Therefore, less bubbles are mixed in the lubricant oil in the oil tank, and smooth and stabilized supply of lubricant oil to various parts of the engine are provided.

According to the embodiment, a guide means 56 is provided to cause the lubricant oil returned through said oil return port 48 into the oil tank 43 to fall onto said slope section 54. A bracket 51 is secured to an outside wall of said oil tank 43. Said oil tank 43 is secured to the vehicle body frame through said bracket 51. Said guide means 56 is located on an inside wall of said oil tank 43, and means 57, 61 for securing said guide means 56 to said oil tank 43 is also used to secure said bracket 51 to said oil tank 43.

In the example of constitution, the guide 56 is provided to guide and drop the lubricant oil returned through the oil return port to the oil tank onto the slope 56.

With above constitution, since lubricant oil is caused to flow along the guide, the lubricant oil is securely guided with the slope and caused to fall off.

In the example of constitution, the bracket 51 is secured to the outside wall of the oil tank 43. The oil tank 43 is secured to the vehicle body frame through the bracket 51. The guide 56 is located on the inside wall of the oil tank 43, and the guide 56 and the bracket 51 are secured to the oil tank 43 using common securing means.

With the above constitution, the bracket for securing the oil tank to the vehicle frame and the guide provided in the oil tank are secured to the outside and inside surface of the oil tank using the same, for example, rivets. Therefore, the number of the securing parts, for example rivets, is reduced, which is advantageous for the cost and the control of parts, and improves assembly work efficiency.

In the vehicle according to the embodiment, said slope section 54 is defined by a recessed portion 53 formed on one half side 43b of the oil tank 43. In particular said recessed portion 53 is recessed on a lower part of said oil tank 43 from an inside toward an outside of said oil tank 43 in the direction of the vehicle width.

With the above constitution, a compact layout can be made by placing engine components in the recess formed in the lower part of the oil tank.

In the vehicle according to the embodiment, a draining area 59 for draining lubricant oil is provided in a bottom part of a further half side 43a said oil tank 43 besides said recessed portion 53.

In the example of constitution, the draining area 59 for draining lubricant oil contained in the oil tank 43 is provided at the bottom part, except for the part where the recess 53 is formed, of the oil tank 43.

With the above constitution, since the draining area is provided in the lowermost portion of the oil tank, lubricant oil is less likely to remain in the oil tank when the lubricant oil is drained and changed, so the oil change is carried out smoothly.

## Claims

1. Vehicle, especially snowmobile (1), with an engine (7) and an oil tank (43), said oil tank (43) being formed vertically elongated and being placed by a side of said engine (7),
**characterized in that**
said oil tank (43) is placed by the side of said engine (7) in a vehicle width direction.

2. Vehicle according to claim 1, wherein said engine (7) and said oil tank (43) are disposed in an engine compartment (41) and said engine compartment (41) is surrounded with a covering member (40) and disposed in a front part of a vehicle body (2) of the vehicle.

3. Vehicle according to claim 2, wherein said covering member (40) is provided with at least one fresh air port (44) for introducing fresh air into said engine compartment (41), and said fresh air port (44) is located in front of said oil tank (43) so that fresh air introduced through said fresh air port (44) flows from an area in front of said oil tank (43) to said oil tank (43), and/or a brake means is provided behind said oil tank (43), and an air outlet is placed behind said brake means for discharging fresh air introduced into said engine compartment (41) out of said vehicle body (2).

4. Vehicle according to at least one of the claims 1 to 3, wherein said oil tank (43)is provided with a breather pipe connection port (49) provided on an upper part of the oil tank (43) and located outwardly with regard to a vehicle width direction.

5. Vehicle according to claim 4, wherein a breather pipe is connected to the breather pipe connection port (49) of said oil tank (43) and to a cam driving chamber and/or a crank chamber of said engine (7) for providing a communication of said cam driving chamber and/or crank chamber with said oil tank (43).

6. Vehicle according to at least one of the claims 1 to 5, wherein the oil tank (43) comprises a slope section (54) arranged in a middle part of the oil tank (43) regarding the vertical direction, and an oil return port (48) is provided on an upper part of said oil tank (43), wherein said oil return port (48) located so that said lubricant oil returned to said oil tank through said oil return port (48) falls on said slope section (54), and/or a supply port (58) for supplying lubricant oil to said engine (7) is provided in a bottom part of said oil tank (43).

7. Vehicle according to claim 6, wherein a guide means (56) is provided to cause the lubricant oil returned through said oil return port (48) into the oil tank (43) to fall onto said slope section (54).

8. Vehicle according to claim 7, wherein a bracket (51) is secured to an outside wall of said oil tank (43), said oil tank (43) is secured to the vehicle body frame through said bracket (51), said guide means (56) is located on an inside wall of said oil tank (43), and means (57, 61) for securing said guide means (56) to said oil tank (43) is also used to secure said bracket (51) to said oil tank (43).

9. Vehicle according to at least one of the claims 6 or 8, wherein said slope section (54) is defined by a recessed portion (53) formed on one half side (43b) of the oil tank (43), especially said recessed portion (53) is recessed on a lower part of said oil tank (43) from an inside toward an outside of said oil tank (43) in the direction of the vehicle width.

10. Vehicle according to claim 9, wherein a draining area (59) for draining lubricant oil is provided in a bottom part of a further half side (43a) said oil tank (43) besides said recessed portion (53).

## Patentansprüche

1. Fahrzeug, insbesondere Schneemobil (1), mit einem Motor (7) und einem Öltank (43), wobei der Öltank (43) vertikal langgestreckt ist und auf einer Seite des Motors (7) platziert ist,
**dadurch gekennzeichnet, dass**
der Öltank (43) auf der Seite des Motors (7) in Richtung der Breite des Fahrzeuges platziert ist.

2. Fahrzeug nach Anspruch 1, wobei der Motor (7) und der Öltank (43) in einem Motorraum (41) angeordnet sind und der Motorraum (41) mit einem Abdeckteil (40) umgeben und in einem vorderen Teil der Fahrzeugkarosserie (2) des Fahrzeuges angeordnet ist.

3. Fahrzeug nach Anspruch 2, wobei das Abdeckteil (40) mit zumindest einer Frischluftöffnung (44) zum Einleiten von Frischluft in den Motorraum (41) versehen ist und die Frischluftöffnung (44) vor dem Öltank (43) angeordnet ist, so dass Frischluft, die durch die Frischluftöffnung (44) eingeleitet wird, von einem Bereich vor dem Öltank (43) zu dem Öltank (43) strömt, und / oder eine Bremseinrichtung hinter dem Öltank (43) angeordnet ist und ein Luftauslass hinter der Bremseinrichtung zum Abgeben von in den Motorraum (41) eingeleiteter Frischluft aus der der Fahrzeugkarosserie (2) vorgesehen ist.

4. Fahrzeug nach zumindest einem der Ansprüche 1 bis 3, wobei der Öltank (43) mit einer Entlüftungsstutzen- Verbindungsöffnung (49) versehen ist, vorgesehen an einem oberen Teil des Öltanks (43) und außen in Bezug zu einer Richtung der Fahrzeugbreite angeordnet.

5. Fahrzeug nach Anspruch 4, wobei ein Entlüftungsstutzen mit der Entlüftungsstutzen- Verbindungsöffnung (49) des Öltanks (43) und mit einer Nockenantriebskammer und / oder Kurbelkammer des Motors (7) zum Schaffen einer Verbindung der Nockenantriebskammer und / oder der Kurbelkammer mit dem Öltank (43) verbunden ist.

6. Fahrzeug nach zumindest einem der Ansprüche 1 bis 5, wobei der Öltank (43) einen Neigungsabschnitt (54) aufweist, angeordnet in einem Mittelteil des Öltanks (43) in Bezug auf die vertikale Richtung, und eine Ölrückführöffnung (48) ist an dem oberen Teil des Öltanks (43) vorgesehen, wobei die Ölrückführöffnung (48) so angeordnet ist, dass das Schmieröl, das in den Öltank durch die Ölrückführöffnung (48) zurückgeführt wird, auf den Neigungsabschnitt (54) fällt, und / oder eine Zuführöffnung (58) zum Zuführen von Schmieröl in den Motor (7) in einem Bodenteil des Öltanks (43) vorgesehen ist.

7. Fahrzeug nach Anspruch 6, wobei eine Führungseinrichtung (56) vorgesehen ist, um das Schmieröl, zurückgeführt durch die Ölrückführöffnung (48) in den Öltank (43), zu veranlassen, auf den Neigungsabschnitt (54) zu fallen.

8. Fahrzeug nach Anspruch 7, wobei eine Halterung (51) an einer Außenwand des Öltanks (43) befestigt ist, wobei der Öltank (43) an dem Rahmen der Fahrzeugkarosserie durch die Halterung (51) befestigt ist, die Führungseinrichtung (56) an einer Innenwand des Öltanks (43) angeordnet ist, und eine Einrichtung (57, 61) zum Befestigen der Führungseinrichtung (56) an dem Öltank (43) auch verwendet wird, die Halterung (51 an dem Öltank (43) zu befestigen.

9. Fahrzeug nach zumindest einem der Ansprüche 6 oder 8, wobei der Neigungsabschnitt (54) durch einen ausgesparten Abschnittes (53), gebildet auf einer halben Seite (43b) des Öltanks (43), gebildet ist, wobei der ausgesparte Abschnitt (53) an einem unteren Teil des Öltanks (43) von innen in Richtung nach außen des Öltanks (43) in der Richtung der Breite des Fahrzeuges ausgespart ist.

10. Fahrzeug nach Anspruch 9, wobei ein Ablaßbereich (59) zum Ablassen von Schmieröl in einem Bodenteil einer weiteren halben Seite (43a) des Öltanks (43) neben dem ausgesparten Abschnitt (53) vorgesehen ist.

## Revendications

1. Véhicule, en particulier une motoneige (1), avec un moteur (7) et un réservoir d'huile (43), ledit réservoir d'huile (43) étant formé verticalement allongé et étant placé sur un côté dudit moteur (7),
**caractérisé en ce que** :
ledit réservoir d'huile (43) est placé sur le côté dudit moteur (7) dans le sens de la largeur du véhicule.

2. Véhicule selon la revendication 1, dans lequel le moteur (7) et ledit réservoir d'huile (43) sont disposés dans un compartiment de moteur (41) et ledit compartiment de moteur (41) est entouré par un élément de recouvrement (40) et disposé dans une partie avant d'un corps de véhicule (2) du véhicule.

3. Véhicule selon la revendication 2, dans lequel ledit élément de recouvrement (40) est prévu avec au moins un orifice d'air (44) pour introduire de l'air dans ledit compartiment de moteur (41), et ledit orifice d'air (44) est positionné en face dudit réservoir d'huile (43) de sorte que l'air introduit par ledit orifice d'air (44) s'écoule d'une zone située en face dudit réservoir d'huile (43) jusqu'audit réservoir d'huile (43) et/ou on prévoit des moyens de frein derrière ledit réservoir d'huile (43), et une sortie d'air est placée derrière lesdits moyens de frein pour décharger l'air introduit dans ledit compartiment de moteur (41) à l'extérieur dudit corps de véhicule (2).

4. Véhicule selon au moins l'une des revendications 1 à 3, dans lequel ledit réservoir d'huile (43) est équipé d'un orifice de raccordement (49) de reniflard prévu sur une partie supérieure du réservoir d'huile (43) et positionné vers l'extérieur par rapport au sens de la largeur du véhicule.

5. Véhicule selon la revendication 4, dans lequel un reniflard est raccordé à un orifice de raccordement (49) de reniflard dudit réservoir d'huile (43) et à une chambre d'entraînement de came et/ou une chambre de manivelle dudit moteur (7) pour fournir une communication de ladite chambre d'entraînement de came et/ou de la chambre de manivelle avec ledit réservoir d'huile (43).

6. Véhicule selon au moins l'une des revendications 1 à 5, dans lequel le réservoir d'huile (43) comprend une section d'inclinaison (54) agencée dans une partie centrale du réservoir d'huile (43) dans la direction verticale, et un orifice de retour d'huile (48) est prévu sur une partie supérieure dudit réservoir d'huile (43), dans lequel ledit orifice de retour d'huile (48) situé de sorte que ladite huile de lubrification revient dans ledit réservoir d'huile par ledit orifice de retour d'huile (48), tombe sur ladite section d'inclinaison (54) et/ou un orifice d'alimentation (58) pour alimenter l'huile de lubrification audit moteur (7) est prévu dans une partie inférieure dudit réservoir d'huile (43).

7. Véhicule selon la revendication 6, dans lequel on prévoit des moyens de guidage (56) pour amener l'huile de lubrification qui revient par ledit orifice de retour d'huile (48) dans le réservoir d'huile (43) à tomber sur ladite section d'inclinaison (54).

8. Véhicule selon la revendication 7, dans lequel une console (51) est fixée à une paroi externe dudit réservoir d'huile (43), ledit réservoir d'huile (43) est fixé sur le châssis de corps de véhicule par ladite console (51), lesdits moyens de guidage (56) sont situés sur une paroi interne dudit réservoir d'huile (43), et des moyens (57, 61) pour fixer lesdits moyens de guidage (56) sur ledit réservoir d'huile (43) sont également utilisés pour fixer ladite console (51) sur ledit réservoir d'huile (43).

9. Véhicule selon au moins l'une des revendications 6 à 8, dans lequel ladite section d'inclinaison (54) est définie par une partie évidée (53) formée sur un demi-côté (43b) du réservoir d'huile (43), en particulier ladite partie évidée (53) est évidée sur une partie inférieure dudit réservoir d'huile (43) d'un intérieur vers un extérieur dudit réservoir d'huile (43) dans le sens de la largeur du véhicule.

10. Véhicule selon la revendication 9, dans lequel une zone d'évacuation (59) pour évacuer l'huile de lubrification est prévue dans une partie inférieure d'un autre demi-côté (43a) dudit réservoir d'huile (43) en plus de ladite partie évidée (53).
